# EUROPÄISCHE PATENTSCHRIFT

(11) **EP 2 564 083 B1**
(45) Veröffentlichungstag und Bekanntmachung des Hinweises auf die Patenterteilung: **03.10.2018**
(21) Anmeldenummer: 11713470.0
(22) Anmeldetag: 08.03.2011
(51) Int. Cl.: F16C 17/26, F16C 33/24

(54) **ELEKTROMOTORISCHE ANTRIEBSEINHEIT**
ELECTROMOTIVE DRIVE UNIT
ENTRAÎNEMENT ÉLECTROMOTEUR

(30) Priorität: 27.04.2010 DE 202010006089 U
(43) Veröffentlichungstag der Anmeldung: 06.03.2013
(73) Patentinhaber: Brose Fahrzeugteile GmbH & Co. Kommanditgesellschaft, Würzburg, 97076 Würzburg (DE)
(72) Erfinder: JOACHIMSMEYER, Dirk, 97262 Hausen (DE); WANG, Zhiguo, 80997 München (DE)
(74) Vertreter: FDST Patentanwälte
(86) Internationale Anmeldenummer: PCT/EP2011/001128
(87) Internationale Veröffentlichungsnummer: WO 2011/134569

(56) Entgegenhaltungen:
- DE-A1- 4 400 830
- JP-A- 8 170 646
- US-A- 5 490 730

## Beschreibung

Die Erfindung betrifft eine elektromotorische Antriebseinheit, beispielsweise für einen Fensterheber oder einen Kühlerlüfter eines Kraftfahrzeugs, mit einem Gleitlager einer Welle.

Während sich bei einem Wälzlager die relativ zueinander bewegten Teile über Wälzkörper, beispielsweise Kugeln, aufeinander abstützen, stehen die beiden sich relativ zueinander bewegenden Teile eines Gleitlagers in direktem Kontakt und gleiten aufeinander. Die hierbei verursachte Gleitreibung kann durch geeignete Wahl einer reibungsarmen Materialpaarung des Gleitlagers und der lagernden Welle oder durch Erzeugung eines Schmierfilms, der die Kontaktflächen des Gleitlagers und der Welle voneinander trennt, niedrig gehalten werden.

Um stets einen genügend großen Schmiermittelvorrat verfügbar zu halten, sind Gleitlager häufig als Sinterlager ausgeführt, bei denen das Gleitlager anstelle eines massiven Lagerwerkstoffs aus einem gesinterten Material besteht. Gebräuchlich sind hier Sinterbronze und Sintereisen. Die gesinterten Metalle werden durch Pressen von Metallpulver unter hohem Druck hergestellt. Aufgrund der Porosität der Sintermetalle mit dadurch bedingt einem bestimmten Porenanteil ist eine gewisse Schmiermittelbevorratung gegeben, indem sich die Poren des Sinterlagers mit dem Schmierstoff, beispielsweise Öl, füllen.

Ein derartiges Gleitlager neigt jedoch in nachteiliger Weise bei relativ tiefen Temperaturen zu unerwünschten Laufgeräuschen (Quietschen und/oder Rattern). Dieses unerwünschte Geräuschverhalten wird im Wesentlichen verursacht durch eine mangelnde Schmierung zwischen der Welle und dem Gleitlager. Grund hierfür ist, dass die Schmiereigenschaften des Schmierstoffs bei tiefen Temperaturen zunehmend verloren gehen.

Aus der DE 44 00 830 A1 ist ein Gleitlager bekannt, welches unter Verwendung von Plastikwerkstoffen hergestellt ist. So befindet sich die drehbare Welle sowohl innerhalb eines porigen Plastik-Formkörpers als auch im zentralen Bereich eines Lagerrings. Zur Verringerung der Lagerreibung zwischen der Welle und dem Plastik-Formkörper weist dieser an der gemeinsamen Berührungsfläche einen Anteil an Schmierstoff, z. B. Graphit, auf. Die Hauptfunktion des Plastik-Formkörpers ist die Speicherung eines flüssigen Schmierstoffs, der an den Lagerstellen benötigt wird. Der Lagerring besteht aus Metall oder Keramik, vorzugsweise aus Stahl, und ist während eines Sintervorgangs an den Plastik-Formkörper angesintert.

Aus der JP 81 70646 A ist es bekannt, in radialer Abfolge zwischen einem der Welle zugeordneten Keramik-Gleitlager und einem Halteteil mit gegenüber dem Keramik-Lager größerem Wärmeausdehnungskoeffizienten eine ebenfalls metallische Abstandsbuchse einzusetzen, deren Wärmeausdehnungskoeffizient größer ist als derjenige des Halteteils.

Aus der US 5,490,730 ist eine Gleitlageranordnung im Bereich der Schaufel eines Hydraulikbaggers bekannt. Bei diesem bekannten Gleitlager ist eine die feststehende Welle umgebende Lagerbuchse aus einer Kupfer- und Eisenpulver-Verbundlegierung hergestellt, um eine bestimmte Porosität bereitzustellen und somit auch hochviskoses Schmieröl in ausreichenden Mengen aufnehmen bzw. speichern zu können.

Der Erfindung liegt die Aufgabe zugrunde, eine elektromotorische Antriebseinheit mit einem Gleitlager mit über einen großen Temperaturbereich gutem Geräuschverhalten anzugeben. Das Gleitlager soll dabei insbesondere auch bei beengten Bauraumverhältnissen, wie diese bei elektromotorischen Stell-, Hilfs- oder Lüfterantrieben in Kraftfahrzeugen vorherrschen, mit guten Lauf- und Geräuscheigenschaften einsetzbar sein.

Diese Aufgabe wird erfindungsgemäß gelöst durch die Merkmale des Anspruchs 1. Vorteilhafte Ausgestaltungen, Weiterbildungen und Varianten sind Gegenstand der hierauf rückbezogenen Unteransprüche.

Hierzu besteht das Gleitlager der elektromotorischen Antriebseinheit aus zwei Gleitlagerteilen mit unterschiedlichen thermischen Ausdehnungskoeffizienten (Wärmeausdehnungskoeffizienten). Dabei ist eines der Gleitlagerteile vollständig oder zumindest im Wesentlichen metallisch mit einem Wärmeausdehnungskoeffizient im Bereich zwischen etwa 10 x 10⁻⁶ 1/K und ca. 20 x 10⁻⁶ 1/K, während das andere Gleitlagerteil einen Wärmeausdehnungskoeffizienten zwischen 50 x 10⁻⁶ 1/K und etwa 150 x 10⁻⁶ 1/K aufweist.

Geeignete Materialien oder Werkstoffe für das erste, metallische Gleitlagerteil sind einerseits Sintereisen und Sinterbronze sowie andererseits Stahl, Eisen, Bronze oder Messing. Geeignete Werkstoffe bzw. Materialien für das zweite, kunststoffartige Lagerteil sind vorzugsweise thermoplastische Kunststoffe, wie Polytetrafluorethylen (PTFE), auch als Teflon bekannt, Polyoxymethylen (POM) oder Polyvinylchlorid (PVC). Auch können diese verwendeten Kunststoffe mit Additiven, insbesondere Graphit, versetzt sein, um die Festschmiereigenschaften des zweiten Gleitlagerteils zu erhöhen. Dadurch werden die bei tiefen Temperaturen nicht mehr oder nur unzureichend vorhandenen Gleit- und Schmiereigenschaften des Gleitlagers kompensiert.

Die axiale Breite der beiden Gleitlagerteile ist geeigneterweise unterschiedlich. Dabei ist die axiale Breite des ersten, metallischen Gleitlagerteils zweckmäßigerweise wesentlich größer als die axiale Breite des anderen, kunststoffartigen Gleitlagerteils. Dieses ist gegenüber dem dann zylinderförmigen ersten Gleitlagerteil eher ringförmig. Das Gleitlager ist somit eine Kombination aus einem aus Kunststoff bestehenden Stützring (Stützbuchse) mit einem metallischen, insbesondere zylindrischen Gleitlagerteil. An dieses metallische Gleitlagerteil schließt sich auf der Welle das aus Kunststoff bestehende stützringartige Gleitlagerteil vorzugsweise unmittelbar axial an.

Der Außendurchmesser der beiden Gleitlagerteile ist zweckmäßigerweise zumindest annähernd gleich. Hierdurch ist eine geeignete Gesamtgeometrie des aus den beiden Gleitlagerteilen bestehenden Gleitlagers gegeben. Diese ermöglicht eine einfache und Raum sparende Einbettung des Gleitlagers in ein Gehäuseteil, beispielsweise in ein Kunststoff-Getriebegehäuse eines elektromotorischen Antriebs.

Durch die beschriebene Materialpaarung der beiden Gleitlagerteile mit unterschiedlichen Wärmeausdehnungskoeffizienten ist ein Gleitlager bereitgestellt, das über einen großen Temperaturbereich von beispielsweise -40°C bis >100°C geräuscharm einsetzbar ist. Im Temperaturbereich von annähernd oder gleich -20°C bis beispielsweise 120°C trägt das erste, metallische Gleitlagerteil die Welle, während unterhalb von annähernd oder gleich -20°C das zweite, zweckmäßigerweise als Kunststoffstützring ausgeführte Gleitlagerteil die Führung der Welle übernimmt.

Die mit der Erfindung erzielten Vorteile bestehen insbesondere darin, dass mit der Kombination eines aus Kunststoff bestehenden, geeigneterweise ringartigen Gleitlagerteils mit einem metallischen, zweckmäßigerweise zylinderförmigen Gleitlagerteil auch bei tiefen Temperaturen keine oder nur geringe Laufgeräusche auftreten, ohne dass das erfindungsgemäße Gleitlager den Verschleiß eines Kunststofflagers besitzt.

Grund hierfür ist, dass der kunststoffartige Stützring als zweites Gleitlager aufgrund des vergleichsweise großen Ausdehnungskoeffizienten nur bei tiefen Temperaturen die Wellenführung übernimmt und hierbei das Lagerspiel einengt, während bei vergleichsweise hohen Temperaturen - und hierbei auch bereits bei Raumtemperatur - die Welle lediglich durch das erste, metallische Gleitlager geführt wird. Das aus einem - geeigneterweise zur Erhöhung der Festschmiereigenschaften mit Additiven versetzten - thermoplastischen Kunststoff bestehende zweite Gleitlagerteil erfüllt hierbei bei tiefen Temperaturen eine Doppelfunktion, nämlich einerseits die Führung und Lagerung der Welle sowie andererseits die Schmierung des Gleitlagers.

Das Gleitlager der erfindungsgemäßen Antriebseinheit eignet sich daher besonders zur Lagerung der Welle (Anker-, Motor- oder Getriebewelle) eines Servoantriebs, eines Stellantriebs für ein zwischen einer Offenposition und einer Schließposition zu bewegenden Teils (Fahrzeugscheibe, Heckklappe, Schiebedach oder dergleichen) oder eines Lüftergebläseantriebs. Aufgrund des geringen Bauvolumens des erfindungsgemäßen Gleitlagers ist dieses in einfacher Art und Weise in ein geeignetes Gehäuseteil der Antriebseinheit, beispielsweise in ein Getriebegehäuse, Raum sparend einbringbar. Die Verwendung des kombinierten Gleitlagers mit einem metallischen und einem kunststoffartigen Gleitlagerteil ist zudem kostengünstiger als der Einsatz eines Wälzlagers.

Da erkanntermaßen die Betriebsdauer bei niedrigen Temperaturen nur einen vergleichsweise kleinen Anteil der gesamten Lebensdauer ausmacht, wirkt sich eine kürzere Lebensdauer des Kunststoff-Gleitlagerteils nicht oder nahezu bedeutungslos aus. Daher kann das Kunststoff-Gleitlagerteil auch mit vergleichsweise geringer axialer Breite als Raum sparender Kunststoff-Stützring ausgeführt werden.

Nachfolgend werden Ausführungsbeispiele der Erfindung anhand einer Zeichnung näher erläutert. Darin zeigen:
- Fig. 1: in einer teilweisen Schnittdarstellung ein aus zwei Gleitlagerteilen unterschiedlicher Materialien bestehendes Gleitlager mit davon geführter Welle,
- Fig. 2: in einem Diagramm die temperaturabhängige Durchmesseränderung der Lagerteile,
- Fig. 3 bis 8: simulierte Durchmesserverhältnisse der unterschiedlichen Lagerteile bei verschiedenen Temperaturen,
- Fig. 9: in einer Schnittdarstellung das in einen elektromotorischen Stellantrieb eingebaute Gleitlager gemäß Fig. 1, und
- Fig. 10: in einer Schnittdarstellung einen Lüftergebläseantrieb mit zwei die Lüfterradantriebswelle führenden Gleitlagern gemäß Fig. 1.

Einander entsprechende Teile sind in allen Figuren mit den gleichen Bezugszeichen versehen.

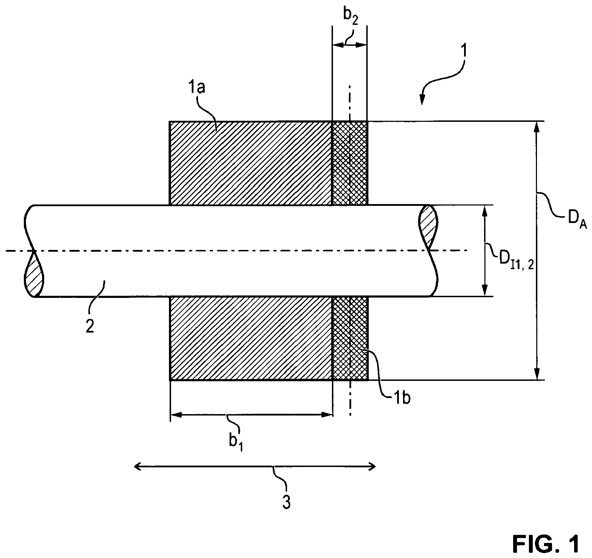

Fig. 1 zeigt in ein zweiteiliges Gleitlager 1 mit einem ersten Gleitlagerteil 1a und einem zweiten Gleitlagerteil 1b im Schnitt, die eine perspektivisch angedeutete Welle 2 lagern bzw. führen. Das erste Gleitlagerteil 1a ist zylinderförmig und weist - in Axialrichtung 3 - eine axiale Breite b₁ auf, die größer ist als die axiale Breite b₂ des zweiten Gleitlagerteils 1b. Das Verhältnis der axialen Breiten b₁/b₂ ist beispielsweise etwa vier. Das erste Gleitlagerteil 1a ist somit zylinderförmig, während das zweite Gleitlagerteil 1b im Vergleich hierzu ringförmig ist. Das zweite Gleitlagerteil 1b kann auch buchsenförmig sein. Die beiden Gleitlagerteile 1a und 1b liegen hierbei vorzugsweise unmittelbar, d. h. praktisch abstandslos (spielfrei) aneinander. Der Außendurchmesser D_{A} beider Gleitlagerteile 1a und 1b ist gleich.

Die beiden Gleitlagerteile 1a und 1b weisen unterschiedliche Wärmeausdehnungskoeffizienten α₁ bzw. α₂ [K⁻¹] auf. Dabei ist der Wärmeausdehnungskoeffizient α₁ des ersten Gleitlagerteils 1a kleiner als der Wärmeausdehnungskoeffizient α₂. Demzufolge ändert sich der Innendurchmesser D_{I1,2} in Abhängigkeit von der Temperatur T [°C] unterschiedlich. Dies hat zur Folge, dass in einem bestimmten Temperaturbereich ΔT₁ das erste Gleitlagerteil 1a und im anderen Temperaturbereich ΔT₂ das zweite Gleitlagerteil 1b die Führung bzw. Lagerung der Welle 2 übernimmt.

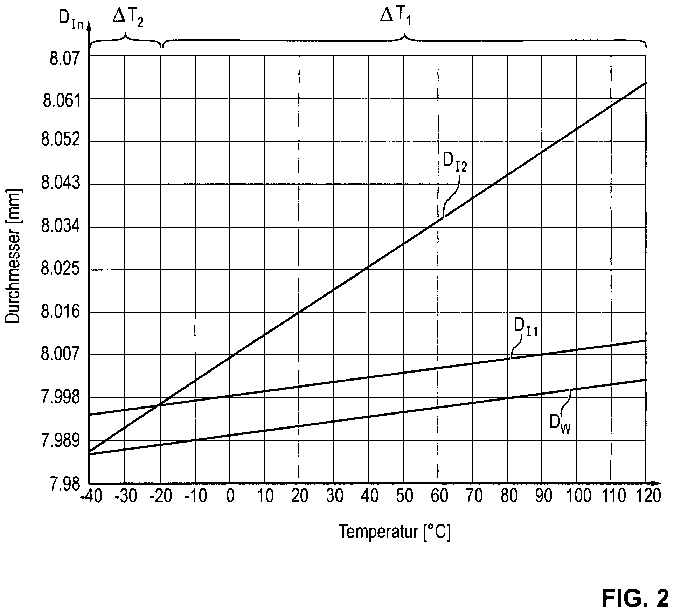

Diese Temperaturabhängigkeit des Innendurchmessers D_{I1,2} ist - in Relation zum Außendurchmesser D_{W} der Welle 2 - in Fig. 2 veranschaulicht. Erkennbar ist, dass im Temperaturbereich ΔT₂ unterhalb von ca. -20°C (Grenztemperatur mit zumindest annähernd gleichem Ausdehnungskoeffizient α_{1,2} der beiden Gleitlagerteile 1a bzw. 1b) der Innendurchmesser D_{I2} des zweiten Gleitlagerteils 1b infolge dessen vergleichsweise großen Ausdehnungskoeffizient α₂ im Vergleich zum Innendurchmesser D_{I2} des ersten Gleitlagerteils 1a kleiner ist. Somit nimmt der Abstand der Innenoberfläche des zweiten Gleitlagerteils 1b zur Wellenoberfläche mit sinkender Temperatur T zunehmend ab, während der Abstand der Innenoberfläche des ersten Gleitlagerteils 1a zur Wellenoberfläche mit sinkender Temperatur T zunimmt.

Im Temperaturbereich ΔT₁ oberhalb von etwa -20°C (Grenztemperatur) nimmt der Abstand der Innenoberfläche des zweiten Gleitlagerteils 1b zur Wellenoberfläche mit steigender Temperatur T zu, während der Abstand der Innenoberfläche des ersten Gleitlagerteils 1a zur Wellenoberfläche mit steigender Temperatur T abnimmt, so das erste Gleitlagerteil 1a bei den vergleichsweise höheren Temperaturen T die Führung der Welle 2 automatisch übernimmt.

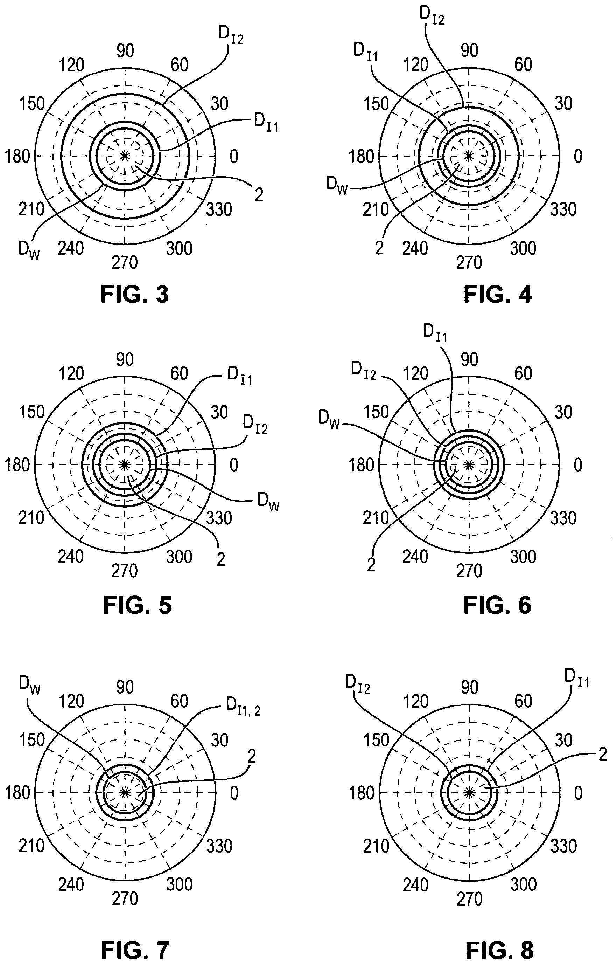

Diese temperaturabhängige Veränderung der Innendurchmesser D_{I1,2} der beiden Gleitlagerteile 1a bzw. 1b gegenüber der Welle 2 ist in den Fig. 3 bis 8 bei unterschiedlichen Temperaturen T simuliert. So zeigt Fig. 3 die Verhältnisse bei einer Temperatur von T = 80°C. Erkennbar ist, dass der Innendurchmesser D_{I2} des zweiten Gleitlagerteils 1b größer ist als der Innendurchmesser D_{I1} des ersten Gleitlagerteils 1a mit vergleichsweise kleinem Ausdehnungskoeffizient α₂. Bei dieser Temperatur T = 80°C führt daher das erste Gleitlagerteil 1a die Welle 2.

Mit abnehmender Temperatur T verringert sich der Innendurchmesser D_{I2} des zweiten Gleitlagerteils 1b infolge dessen vergleichsweise großen Ausdehnungskoeffizienten α₂. Dies ist ausgehend von der Simulationsdarstellung gemäß Fig. 3 anhand der Darstellung gemäß Fig. 4 bei einer Temperatur von T = 40°C und der Darstellung gemäß Fig. 5 bei einer Temperatur von T = 20°C (Raumtemperatur) sowie gemäß Fig. 6 bei einer Temperatur von T = 0°C bis hin zu der in Fig. 7 gezeigten Simulationsdarstellung bei einer Temperatur von T = -20°C veranschaulicht. Bei dieser quasi Grenztemperatur T = -20°C sind die Innendurchmesser D_{I1} und D_{I2} der beiden Gleitlagerteile 1a bzw. 1b zumindest annähernd gleich, so dass beide Gleitlagerteile 1a, 1b die Welle 2 praktisch gemeinsam führen.

Bei dem in Fig. 8 dargestellten Simulationsdiagramm, woraus die Verhältnisse bei einer Temperatur von T = -40°C ersichtlich sind, haben sich die Verhältnisse umgekehrt, so dass in diesem Temperaturbereich ΔT₂ der Innendurchmesser D_{I1} des ersten Gleitlagerteils 1a größer ist als der Innendurchmesser D_{I2} des zweiten Gleitlagerteils 1b. Dieses übernimmt somit bei diesem Temperaturbereich ΔT₂ die Führung der Welle 2.

Ein bevorzugtes Material des ersten Gleitlagerteils 1a ist Sintereisen (12 bis 13 x 10⁻⁶ K⁻¹) oder Sinterbronze (α₁ = 18 x 10⁻⁶ K⁻¹). Dies ermöglicht eine vergleichsweise gute Schmierung aufgrund eines infolge der Porosität der Sintermaterialien guten Speicherung und Vorhaltung eines Schmiermittels, beispielsweise Schmieröl.

Das Material des ersten Gleitlagerteils 1a kann jedoch auch Eisen oder Stahl (α₁ = 12 bis 13 x 10⁻⁶ K⁻¹) sein. Alternativ ist als Material für das erste Gleitlagerteil 1a auch Bronze oder Messing (α₁ = 17,5 bis 18,4 x 10⁻⁶ K⁻¹) verwendbar.

Das zweite Gleitlagerteil 1b besteht geeigneterweise aus als Teflon bekanntem PTFE (α₂ = 100 x 10⁻⁶ K⁻¹). Als ein weiteres geeignetes themoplastisches Kunststoffmaterial hat sich POM (α₂ = 110 x 10⁻⁶ K⁻¹) oder PVC (α₂ = 50 x 10⁻⁶ K⁻¹) herausgestellt. Der für das zweite Gleitlagerteil 1b verwendete Kunststoff ist zur Erhöhung der Schmiereigenschaften des Gleitlagers 1 auch bei niedrigen Temperaturen T vorzugsweise mit Graphit oder einem anderen geeigneten Additiv versetzt. Zusätzlich zu dem im Vergleich zum Material des ersten Gleitlagerteils 1a größeren Wärmeausdehnungskoeffizienten α₂ weist das für das zweite Gleitlagerteil 1b verwendete Material somit eine gute Gleitfähigkeit, Beständigkeit und Herstellbarkeit sowie eine hohe Steifigkeit und Festigkeit auf.

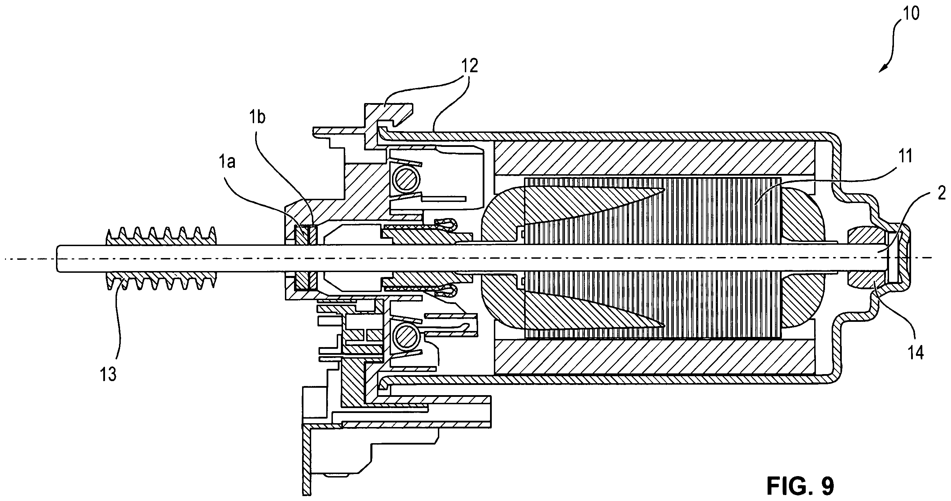

Fig. 9 zeigt als Einsatzbeispiel für das erfindungsgemäß zweiteilige Gleitlager 1 eine Antriebseinheit (z. B. Fensterheber) 10 mit einem Elektromotor 11 mit dessen Antriebswelle 2 innerhalb eines Gehäuses 12. Die Antriebswelle 2 weist getriebeseitig eine Schnecke 13 auf, die in nicht näher dargestellter Art und Weise mit einem Schneckenrad eines Schneckengetriebes kämmt, das mit einem nicht dargestellten Stellelement, beispielsweise mit einer Fensterscheibe, eines Kraftfahrzugs gekoppelt ist.

Das erfindungsgemäße Gleitlager 1 mit den beiden Gleitlagerteilen 1a und 1b ist in diesem Ausführungsbeispiel im Bereich zwischen dem Elektromotor 11 und dem Schneckengetriebe 13 in das Gehäuse 12 eingebettet und führt (lagert) dort die Welle 2. Motorseitig ist die Antriebswelle 2 in einem Kalottenlager 14 gelagert. Anstelle dieses Kalottenlagers 14 kann jedoch ebenfalls ein erfindungsgemäßes Gleitlager 1 eingesetzt sein.

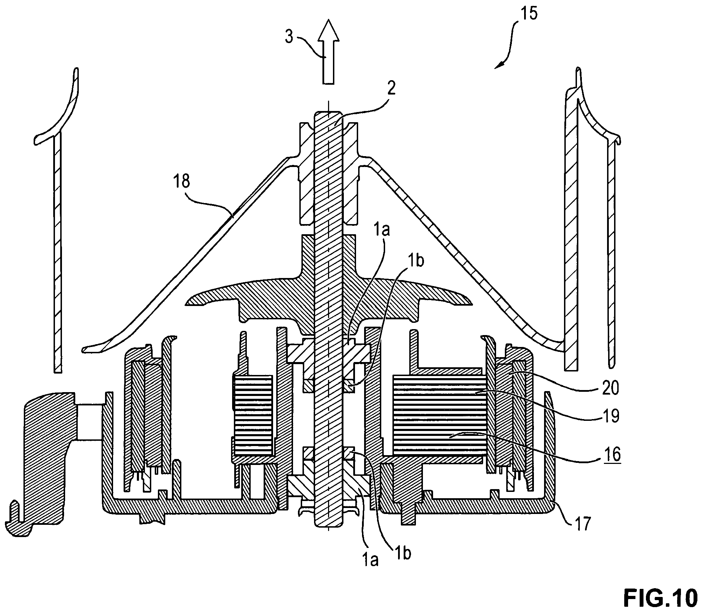

Fig. 10 zeigt als weiteres Einsatzbeispiel für das erfindungsgemäß zweiteilige Gleitlager 1 ein Lüftergebläseantrieb (elektromotorischer Kühlerlüfter) 15 mit einem Elektromotor 16, dessen Antriebswelle 2 innerhalb eines Gehäuses 17 in zwei Gleitlagern 1 mit jeweils einem ersten Gleitlagerteil 1a und einem zweiten Gleitlagerteil 1b gelagert ist. Die Antriebswelle 2 ist mit einem Lüfterrad 18 gekoppelt. Der Elektromotor 16 ist als Außenläufermotor mit einem zentralen Stator 19 und einem um diesen rotierenden Rotor 20 ausgeführt.

### Bezugszeichenliste

- 1: Gleit-/Sinterlager
- 1a: erstes Lagerteil
- 1b: zweites Lagerteil /Stützring
- 2: Antriebs-/Welle
- 3: Axialrichtung
- 10: Antriebseinheit
- 11: Elektromotor
- 12: Gehäuse
- 13: Schnecke
- 14: Kalottenlager
- 15: Lüftergebläseantrieb
- 16: Elektromotor
- 17: Gehäuse
- 18: Lüfterrad
- 19: Stator
- 20: Rotor

- b_{1.2}: axiale Breite
- D_{A}: Außendurchmesser
- D_{I1,2}: Innendurchmesser
- D_{W}: Wellenaußendurchmesser
- ΔT_{1,2}: Temperaturbereich

## Patentansprüche

1. Elektromotorische Antriebseinheit (10) eines Kraftfahrzeugs, insbesondere Lüftergebläseantrieb (15) oder Stellantrieb (10) für ein Stellelement, mit einem von einer Welle (2) durchsetzten Gehäuse (12, 17) mit darin eingebettet mindestens einem Gleitlager (1) mit einem die Welle (2) umgebenden ersten Gleitlagerteil (1a) und mit einem an dieses axial anschließenden zweiten Gleitlagerteil (1b), dessen Wärmeausdehnungskoeffizient (α₂) größer ist als der Wärmeausdehnungskoeffizient (α₁) des ersten Gleitlagerteils (1a),
- wobei das erste Gleitlagerteil (1a) einen Wärmeausdehnungskoeffizient (α₁) zwischen 10 · 10⁻⁶ (1/K) und 20 · 10⁻⁶ (1/K) und das zweite Gleitlagerteil (1b) einen Wärmeausdehnungskoeffizient (α₂) ≥ 50 · 10⁻⁶ (1/K), aufweist, und
- wobei die Führung der Welle (2) im Temperaturbereich oberhalb von annähernd oder gleich -20°C im ersten Gleitlagerteil (1a) und im Temperaturbereich unterhalb von annähernd bzw. gleich -20°C im zweiten Gleitlagerteil (1b) erfolgt.

2. Elektromotorische Antriebseinheit (10) nach Anspruch 1,
**dadurch gekennzeichnet,**
**dass** das zweite Gleitlagerteil (1b) einen Wärmeausdehnungskoeffizient (α₂) zwischen 50 · 10⁻⁶ (1/K) und 150 · 10⁻⁶ (1/K) aufweist.

3. Elektromotorische Antriebseinheit (10) nach Anspruch 1 oder 2,
**dadurch gekennzeichnet,**
**dass** sich das zweite Gleitlagerteil (1b) an das erste Gleitlagerteil (1a) axial abstandslos anschließt.

4. Elektromotorische Antriebseinheit (10) nach einem der Ansprüche 1 bis 3,
**dadurch gekennzeichnet, dass** die axiale Breite (b₁) des ersten Gleitlagerteils (1a) größer ist als die axiale Breite (b₂) des zweiten Gleitlagerteils (1b).

5. Elektromotorische Antriebseinheit (10) nach einem der Ansprüche 1 bis 4,
**dadurch gekennzeichnet,**
**dass** der Außendurchmesser (D_{A}) des ersten und zweiten Gleitlagerteils (1a, 1b) zumindest annähernd gleich ist.

6. Elektromotorische Antriebseinheit (10) nach einem der Ansprüche 1 bis 5,
**dadurch gekennzeichnet,**
**dass** das erste Gleitlagerteil (1a) aus einem Sintermetall besteht.

7. Elektromotorische Antriebseinheit (10) nach einem der Ansprüche 1 bis 6,
**dadurch gekennzeichnet,**
**dass** das zweite Gleitlagerteil (1b) aus einem thermoplastischen Kunststoff, vorzugsweise aus PTFE, besteht.

8. Elektromotorische Antriebseinheit (10) nach einem der Ansprüche 1 bis 7, **dadurch gekennzeichnet,**
**dass** das erste Gleitlagerteil (1a) aus einem metallischen und das zweite Gleitlagerteil (1b) aus einem kunststoffartigen Material besteht.

## Claims

1. Electromotive drive unit (10) of a motor vehicle, in particular a ventilation fan drive (15) or actuator (10) for an actuating element, having a housing (12, 17) penetrated by a shaft (2) having at least one sliding bearing (1) embedded therein having a first sliding bearing part (1a) surrounding the shaft (2) and having a second sliding bearing part (1b) axially attached to it, the coefficient of thermal expansion (α₂) of which second sliding bearing part (1b) is greater than the coefficient of thermal expansion (α₁) of the first sliding bearing part (1a),
- wherein the first sliding bearing part (1a) has a coefficient of thermal expansion (α₁) of between 10 · 10⁻⁶ (1/K) and 20 · 10⁻⁶ (1/K), and the second sliding bearing part (1b) has a coefficient of thermal expansion (α₂) of ≥ 50 . 10⁻⁶ (1/K), and
- wherein the guiding of the shaft (2) takes place in the temperature range above approximately or equal to -20°C in the first sliding bearing part (1a) and in the temperature range below approximately or equal to -20°C in the second gliding bearing part (1b).

2. Electromotive drive unit (10) according to claim 1,
**characterised in that**
the second sliding bearing part (1b) has a coefficient of thermal expansion (α₂) of between 50 · 10⁻⁶ (1/K) and 150 · 10⁻⁶ (1/K).

3. Electromotive drive unit (10) according to claim 1 or 2,
**characterised in that**
the second sliding bearing part (1b) is axially attached to the first sliding bearing part (1a) without a gap.

4. Electromotive drive unit (10) according to one of claims 1 to 3,
**characterised in that**
the axial width (b₁) of the first sliding bearing part (1a) is greater than the axial width (b₂) of the second sliding bearing part (1b).

5. Electromotive drive unit (10) according to one of claims 1 to 4,
**characterised in that**
the external diameter (D_{A}) of the first and second sliding bearing part (1a, 1b) is at least approximately equal.

6. Electromotive drive unit (10) according to one of claims 1 to 5,
**characterised in that**
the first sliding bearing part (1a) consists of a sintered metal.

7. Electromotive drive unit (10) according to one of claims 1 to 6,
**characterised in that**
the second sliding bearing part (1b) consists of a thermoplastic plastic, preferably of PTFE.

8. Electromotive drive unit (10) according to one of claims 1 to 7,
**characterised in that**
the first sliding bearing part (1a) consists of a metallic material, and the second sliding bearing part (1b) consists of a plastic-like material.

## Revendications

1. Unité d'entraînement électromotrice (10) d'un véhicule automobile, en particulier entraînement de ventilateur (15) ou mécanisme de commande (10) pour un actionneur, avec un carter (12, 17) traversé par un arbre (2) et dans lequel est encastré au moins un palier lisse (1) avec une première partie de palier lisse (1a) entourant l'arbre (2) et avec, raccordée axialement à celle-ci, une deuxième partie de palier lisse (1b) dont le coefficient de dilatation thermique (α2) est supérieur au coefficient de dilatation thermique (α₁) de la première partie de palier lisse (1a),
- la première partie de palier lisse (1a) ayant un coefficient de dilatation thermique (α₁) compris entre 10 • 10⁻⁶ (1/K) et 20 • 10⁻⁶ (1/K), et la seconde partie de palier lisse (1b) ayant un coefficient de dilatation thermique (α₂) ≥ 50 • 10⁻⁶ (1/K), et
- le guidage de l'arbre (2) dans la plage de température supérieure à environ ou égale à -20°C étant réalisé dans la première partie de palier (1a) et dans la plage de température inférieure à environ ou égale à - 20 °C dans la seconde partie de palier (1b).

2. Unité d'entraînement électromotrice (10) selon la revendication 1, **caractérisée en ce que** la deuxième partie de palier lisse (1b) a un coefficient de dilatation thermique (α₂) compris entre 50 • 10⁻⁶ (1/K) et 150 • 10⁻⁶ (1/K).

3. Unité d'entraînement électromotrice (10) selon la revendication 1 ou 2, **caractérisée en ce que** la deuxième partie de palier lisse (1b) est raccordée axialement sans espace à la première partie de palier lisse (1a).

4. Unité d'entraînement électromotrice (10) selon l'une des revendications 1 à 3, **caractérisée en ce que** la largeur axiale (b₁) de la première partie de palier lisse (1a) est supérieure à la largeur axiale (b₂) de la deuxième partie de palier lisse (1b).

5. Unité d'entraînement électromotrice (10) selon l'une des revendications 1 à 4, **caractérisée en ce que** le diamètre extérieur (D_{A}) de la première et de la deuxième partie de palier lisse (1a, 1b) sont au moins approximativement égaux.

6. Unité d'entraînement électromotrice (10) selon l'une des revendications 1 à 5, **caractérisée en ce que** la première partie de palier lisse (1a) est constituée d'un métal fritté.

7. Unité d'entraînement électromotrice (10) selon l'une des revendications 1 à 6, **caractérisée en ce que** la deuxième partie de palier lisse (1b) est constituée d'un matériau thermoplastique, de préférence du PTFE.

8. Unité d'entraînement électromotrice (10) selon l'une des revendications 1 à 7, **caractérisée en ce que** la première partie de palier lisse (1a) est constituée d'un matériau métallique et la seconde partie de palier lisse (1b) d'un matériau de type plastique.
